## Europäisches Patentamt
## European Patent Office
## Office européen des brevets

(19)

(11) Veröffentlichungsnummer: **0 209 488**
**B1**

(12) # EUROPÄISCHE PATENTSCHRIFT

(45) Veröffentlichungstag der Patentschrift:
**29.11.89**

(51) Int. Cl.⁴: **B 23 Q 35/128, B 23 K 26/04**

(21) Anmeldenummer: **86810278.1**

(22) Anmeldetag: **19.06.86**

(54) Anordnung zur Laserbearbeitung eines Werkstücks.

(30) Priorität: **03.07.85 CH 2856/85**

(43) Veröffentlichungstag der Anmeldung:
**21.01.87 Patentblatt 87/4**

(45) Bekanntmachung des Hinweises auf die Patenterteilung:
**29.11.89 Patentblatt 89/48**

(84) Benannte Vertragsstaaten:
**DE FR GB SE**

(73) Patentinhaber: **GET Gesellschaft für Elektronik-Technologie mbH, Klingenbergstrasse 16, D-4930 Detmold (DE)**

(72) Erfinder: **Schmall, Karl-Heinz, Waldstrasse 20, D-7570 Baden-Baden 19 (DE)**

(74) Vertreter: **Hepp, Dieter et al, HEPP & Partner AG Marktgasse 18, CH-9500 Wil (CH)**

(56) Entgegenhaltungen:
**EP-A- 0 098 238**
**EP-A- 0 130 940**
**DE-A- 2 145 635**
**DE-U- 8 508 544**
**GB-A- 1 477 710**

**PATENTS ABSTRACTS OF JAPAN, Band 8, Nr. 270 (M-344)[1707], 11. Dezember 1984; & JP-A-59 141 391 (TOYOTA JIDOSHA K.K.) 14-08-1984**
**IEEE SPECTRUM, Band 16, Nr. 5, Mai 1979, Seiten 42-49, IEEE, New York, US; R. ALLEN: "Lasers in the factory"**

## Beschreibung

Die Erfindung betrifft eine Anordnung zum Bearbeiten eines Werkstücks mittels eines Laserstrahls gemäss dem Oberbegriff von Anspruch 1.

Derartige Anordnungen, die vor allem zum Trennen oder Schweissen von Werkstücken Anwendung finden, sind in zunehmendem Masse bekannt und gebräuchlich. So setzt sich derzeit das Laser-Schweissen sogar in der Automobilindustrie zum Schweissen von Karosserie-Blechen durch.

Bei den bekannten Anlagen wird die Relativbewegung zwischen Laserstrahl und Werkstück entweder durch entsprechende Verlagerung des Werkstücks, z.B. auf einem X-Y-Tisch, oder durch Verfahren des Laserkopfes über dem Werkstück erreicht.

Dabei sind Steuereinrichtungen bekannt, welche die Antriebseinrichtung für das Werkzeug und/oder das Werkstück nach einem vorbestimmbaren Programm steuern, um z.B. bei automatischen Schneidanlagen vorbestimmbare geometrische Teile aus einem flächigen Körper zu schneiden. Neuerdings sind auch Regeleinrichtungen bekannt, welche die Antriebseinrichtung **für das Werkzeug und/oder das Werkstück** in Abhängigkeit von Oberflächen-Unregelmässigkeiten des Werkstücks, z.B. einer Schweissfuge, automatisch nachregeln. Auch sind Anlagen bekannt, die sowohl eine automatische Bahnsteuerung aufweisen, als auch eine Fühler- und Regeleinrichtung, um beim Auftreten bestimmter Oberflächen-Unregelmässigkeiten ein Regelsignal auszulösen. Solche Mess- und Sensoranordnungen sind z.B. in der EP-A-00 098 238 (veröffentlicht 11.01.84) sowie der EP-A-0 130 940 (veröffentlicht 09.01.85) beschrieben.

Es ist also in der Praxis möglich, die verschiedensten Formen von Oberflächen-Unregelmässigkeiten des Werkstücks durch Fühler derart zu erfassen, dass der Laserstrahl automatisch der durch solche Unregelmässigkeit, z.B. eine Fuge gebildeten Bahn folgt. In der Praxis hat sich dabei gezeigt, dass die Vorschubgeschwindigkeiten derartiger Anordnungen limitiert sind. Dies resultiert in erster Linie daraus, dass seitliche Bahnabweichungen eine ausserordentlich schnelle Nachführung des Laserstrahls erfordern. Wird die Relativbewegung zwischen Laser und Werkstück durch Antrieb des Werkstücks, z.B. auf einem X-Y-Tisch bewirkt, sind schon aufgrund der grossen Massen die Beschleunigungswerte der Antriebseinrichtung begrenzt. Auch wenn der Antrieb am Werkzeug, d.h. also am Laserkopf angreift, sind die Beschleunigungswerte aufgrund der Masse der Gesamtanordnung limitiert.

Zudem besteht die Gefahr, dass bei kleinen, schnell erfolgenden Bahnabweichungen die grosse Masse aufweisende Antriebseinrichtung des Werkzeugs oder Werkstücks in Schwingung gerät.

Der Erfindung liegt daher die Aufgabe zugrunde, die Nachteile des Bekannten zu vermeiden, insbesondere also eine Anordnung zum Bearbeiten eines Werkstücks und ein Verfahren zu schaffen, die extrem schnelle Auslenkung des Laserstrahls bei Seitenabweichung und damit grosse Genauigkeit und hohe Vorschubgeschwindigkeit gewährleisten.

Erfindungsgemäss wird dies in erster Linie dadurch gewährleistet, dass das Bearbeitungswerkzeug eine Hilfs-Nachführeinrichtung zum schnellen Auslenken des Laserstrahls bei kleinen Abweichungen der Ist-Bearbeitungsbahn von der Soll-Bearbeitungsbahn aufweist, wobei die Nachführ-Beschleunigung und/oder Nachführ-Geschwindigkeit der Hilfs-Nachführeinrichtung grösser ist als die Nachführ-Beschleunigung und/oder Nachführ-Geschwindigkeit der Antriebseinrichtung. Da zur Auslenkung des Laserstrahls nur ein Teil des zur Strahlablenkung und/oder Fokussierung erforderlichen optischen Systems bewegt werden muss, ist die bei der Auslenkung bewegte Masse ausserordentlich klein, verglichen mit der Masse des gesamten Laserkopfs inklusiv Antrieb oder der Masse der Aufnahmeeinrichtung zum Halten und Führen des zu bearbeitenden Werkstücks. Dementsprechend lassen sich mit geringem Konstruktionsaufwand und ohne grossen Energieeinsatz grosse Nachführ-Beschleunigungen und Nachführ-Geschwindigkeiten erreichen.

Besonders vorteilhafte Reduzierung der bewegten Massen lässt sich dabei erreichen, wenn im Strahlengang des Lasers eine Ablenkeinrichtung vorgesehen ist, welche durch die Hilfs-Nachführeinrichtung zum Auslenken des Laserstrahls antreibbar ist, wobei die Ablenkeinrichtung vorteilhafterweise wenigstens einen verschwenkbaren Spiegel aufweist.

Schnelle und zuverlässige Auslenkung bei geringerem Wärmeverlust (verglichen mit Linsensystemen) lässt sich erreichen, wenn zur Fokussierung des Laserstrahls ein Paraboloid-Spiegel vorgesehen ist, der vorteilhafterweise zur Schnell-Nachführung verschwenkbar gelagert ist.

Sofern eine Spiegelauslenkung um eine etwa parallel zur Bearbeitungsbahn verlaufende Achse erfolgt, trifft der Laserstrahl im Auslenk-Bereich schräg auf das Werkstück. Sofern dies, z.B. beim Schweissen oder Schneiden, vermieden werden soll, ist es vorteilhaft, wenn stattdessen die Laserstrahlen in einen etwa in Richtung der Bearbeitungsbahn im Abstand vom Werkstück verlaufenden Quer-Strahlengang gelenkt und auf einen Umlenkspiegel gerichtet sind, wobei der Umlenkspiegel die Laserstrahlen gegen das Werkzeug richtet, und wenn zur schnellen Auslenkung durch die Hilfs-Nachführeinrichtung letztere das optische System des Quer-Strahlengangs einschliesslich des Umlenkspiegels etwa parallel zur Werkstückebene um eine Drehachse verschwenkt, die etwa senkrecht zum Werkstück und parallel zum austretenden Laserstrahl verläuft. In der Praxis lässt sich dies vorteilhaft so realisieren, dass wenigstens zwei Umlenkspiegel vorgesehen sind, von denen der erste die gegen das Werkstück gerichteten Laserstrahlen aus einem Hauptstrahlengang in den Querstrahlengang umleitet und wobei die genannte Drehachse mit der Achse des Hauptstrahlengangs fluchtet.

Zur Erfassung von Bahnabweichungen in sämtlichen Richtungen ist es vorteilhaft, wenn der Nachführ-Sensor ringförmig ausgebildet ist und der Laserstrahl durch den Sensor-Ring gelenkt ist. Um Bearbeitungsvorgänge unter Schutzgas durchführen zu können, ist es ausserdem vorteilhaft, wenn eine ringförmige Düse zur Zuführung von Schutzgas in den Arbeitsbereich des Laserstrahls vorgesehen und der Laserstrahl durch die Ring-Düse gelenkt ist. Die Schutzgas-Zuführung ist dabei zuverlässig gesichert unabhängig von der Bewegungsrichtung des Lasers.

In der praktischen Ausführung der erfindungsgemässen Anordnung hat es sich bewährt, einen Haupt-Regler zur Erzeugung von Regelsignalen für den Haupt-Antrieb in einer Nachführachse, z.B. der X-Achse, vorzusehen, und einen Hilfs-Regler zur Erzeugung von Regelsignalen für die Hilfs-Nachführeinrichtung vorzusehen, welche in der gleichen Achse die Nachführung des Laserstrahls bewirkt. Beide Regler werden also grundsätzlich vom Nachführsensor mit Signalen beaufschlagt, um entsprechend dem Bahnverlauf bzw. entsprechend der Bahnabweichungen in der X-Achse eine entsprechende Verlagerung der Relativlage von Werkstück und Laserstrahl herbeizuführen. Die Hilfs-Nachführeinrichtung folgt dabei aufgrund der geringeren Masse und der kleineren Zeitkonstante den Bahnabweichungen wesentlich schneller als der Hauptantrieb. Allerdings ist der Auslenkweg der Hilfs-Nachführeinrichtung relativ klein, so dass sichergestellt werden muss, dass die Hilfs-Nachführeinrichtung nach einer Auslenkung aus ihrer neutralen Position möglichst rasch wieder in die neutrale Position zurückkehrt, um beim Auftreten weiterer Abweichungen wieder nachregeln zu können.

Zu diesem Zweck ist eine Gegenkopplungsschaltung vorgesehen, welche an den Haupt-Regler bzw. den Haupt-Antrieb Antriebssignale abgibt, sofern und solange die Hilfs-Nachführeinrichtung aus ihrer neutralen Position ausgelenkt ist. Dies bewirkt im Regelablauf, dass zunächst die Hilfs-Nachführeinrichtung die Schnellnachführung des Laserstrahls gewährleistet, dass gleichzeitig der Haupt-Antrieb zu laufen beginnt, und die Relativlage von Werkzeug und Werkstück solange verändert wird, bis die Hilfs-Nachführeinrichtung wieder in die neutrale Position zurückkehren kann. Die Hilfs-Nachführeinrichtung wird also nur vorübergehend zur Schnellnachführung eingesetzt und kehrt mit zunehmender Nachführung durch den Hauptantrieb in die neutrale Position zurück.

Um zu vermeiden, dass der Haupt-Antrieb bei geringfügigen positiven und negativen Bahnabweichungen, die durch die Hilfs-Nachführeinrichtung ohne den Haupt-Antrieb nachgeregelt werden können, aktiviert wird, ist in der Gegenkopplungsschaltung ein Zeit- und Integrierglied zur zeitlichen Verzögerung und zum Integrieren der Gegenkopplungssignale vor deren Aufschaltung auf den Haupt-Regler vorgesehen. Sofern sich also positive und negative Gegenkopplungssignale aufheben, bevor das Zeitglied eine Weitergabe an den Haupt-Antrieb erlaubt, wird der Haupt-Antrieb überhaupt nicht aktiviert und die Nachführung erfolgt ausschliesslich durch die Hilfs-Nachführeinrichtung. Nur wenn die Bahnabweichung grösser ist, als dass eine Kompensation durch die Hilfs-Nachführeinrichtung erfolgen könnte, oder wenn eine bleibende Verlagerung der Hilfs-Nachführeinrichtung aus ihrer neutralen Position vorliegt, wird der Haupt-Regler bzw. der Haupt-Antrieb aktiviert, um eine Rückführung der Hilfs-Nachführeinrichtung in die neutrale Position zu bewirken.

Selbstverständlich lässt sich die Gegenkopplung auch auf andere Weise erreichen, wie z.B. durch Summierung der an den Hilfs-Antrieb abgegebenen Signale, wobei sich positive und negative Signale aufheben, in Verbindung mit einem nachgeschalteten Zeitglied, um die Summierung über einen bestimmten Zeitraum durchführen zu können, bevor die Gegenkopplungssignale an den Haupt-Antrieb gelegt werden.

Ersichtlicherweise schafft die Erfindung eine schnelle, exakte und den Haupt-Antrieb schonende Anordnung zur Bearbeiten von Werkstücken mittels Laser.

Die Erfindung ist in folgenden Ausführungsbeispielen anhand der Zeichnungen näher erläutert. Es zeigen:

Figur 1 ein Laser-Bearbeitungswerkzeug in schematischer Darstellung aus der Richtung B gemäss Figur 2,

Figur 2 eine Seitenansicht des Laser-Werkzeugs gemäss Figur 1 im schematischen Teilschnitt sowie mit skizzierter Antriebs- und Regeleinrichtung,

Figur 3 eine schematisierte Draufsicht auf die Anordnung gemäss Figur 2,

Figur 4 ein Blockdiagramm zur Erläuterung der Regeleinrichtung gemäss Figur 3,

Figur 5 ein Blockdiagramm eines abgewandelten Ausführungsbeispiels einer Regeleinrichtung,

Figur 6 die schematische Darstellung eines Laser-Werkzeugs mit anderer Ablenkung des Laserstrahls, und

Figur 7 den schematischen Ablauf einer Nachführung des Laserstrahls durch Antriebseinrichtung und Hilfs-Nachführeinrichtung in vier Stufen.

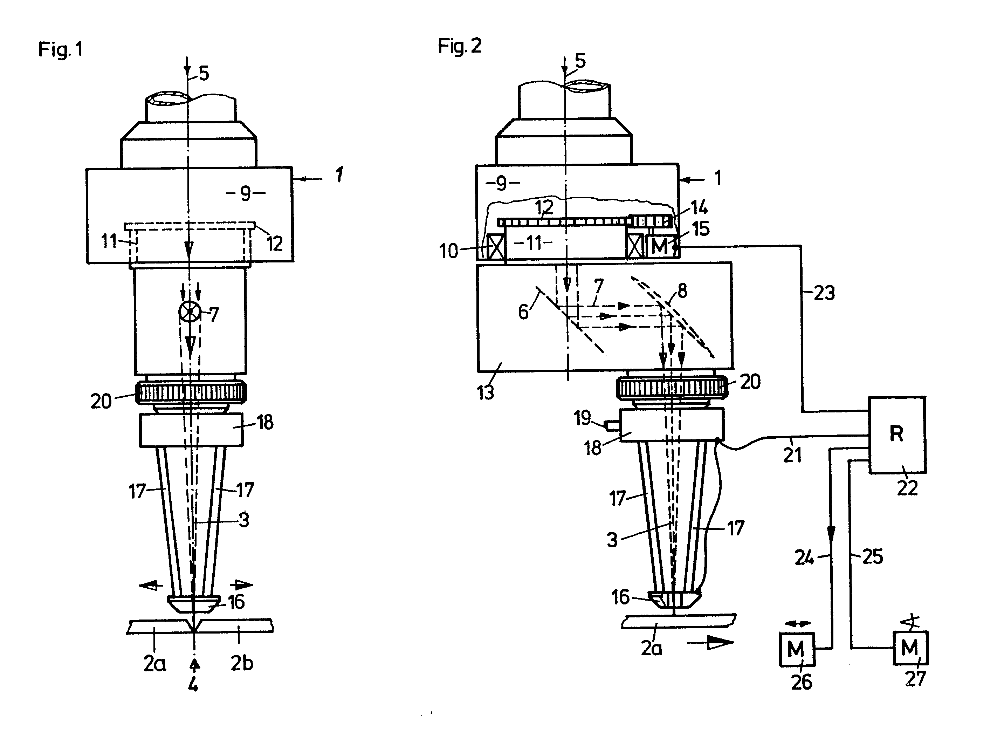

Gemäss Figur 1 bis 4 ist ein Laser-Schweisskopf 1 über zwei Stahlblechen 2a, 2b angeordnet, die durch einen Laserstrahl 3 in einer V-Naht 4 zusammengeschweisst werden sollen.

Der etwa normal zu den Stahlblechen 2a, 2b verlaufende Hauptstrahlengang 5 wird durch den nicht dargestellten Laser auf einen Planspiegel 6 gelenkt, durch diesen in einen Querstrahlengang 7 umgelenkt, auf einen Paraboloid-Spiegel 8 gerichtet und durch diesen derart fokussiert in die V-Naht 4 gerichtet, dass dort der Strahlen-Brennpunkt liegt.

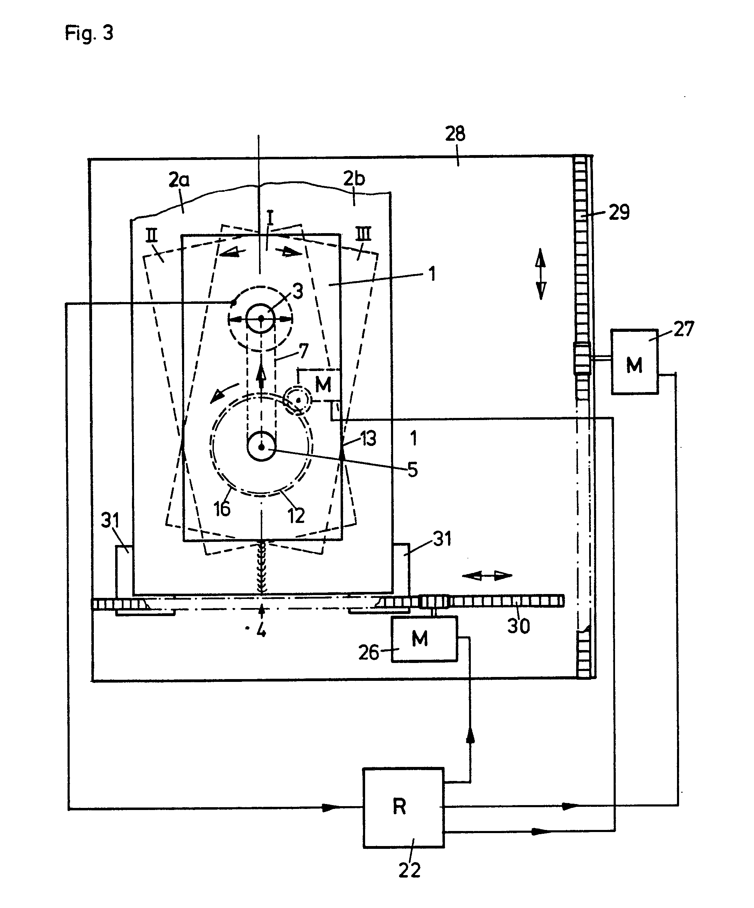

Der Laser-Schweisskopf 1 besteht aus einem oberen Gehäuseteil 9, das mittels einer nicht dargestellten Halterung befestigt ist. Mittels eines Lagers 10 (Figur 2) ist am oberen Gehäuseteil 9 ein rohrförmiger Stutzen 11 befestigt, der einerseits einen Zahnkranz 12 trägt und andererseits mit einem unteren Gehäuseteil 13 verbunden ist. Am Zahnkranz 12 greift ein Zahnrad 14 an, welches durch einen Hilfs-Nachführmotor 15 antreibbar ist. Ersichtlicherweise führt ein Drehen des Nachführmotors 15 über Zahnkranz 12 und Stutzen 11 zu einer Verdrehung des unteren Gehäuseteils 13, wie in Figur 3 gestrichelt mit «Pos. II» bzw. «Pos. III» angedeutet.

Der Laserstrahl 3 wird durch eine Elektrode 16 umgeben, welche Teil eines Nachführsensors ist, wie er in den eingangs genannten Offenlegungsschriften beschrieben wird.

Die Elektrode 16 wird durch vier Rohre 17 gehalten, denen über eine Zuführmuffe 18 und einen Rohranschluss 19 Schutzgas zugeführt wird, welches durch nicht näher dargestellte Schlitzdüsen unterhalb der Elektrode 16 austritt. Die Zufuhrmuffe 18 ist mittels einer Ringmutter 20 an einem Gewinderohr (nicht sichtbar) des unteren Gehäuseteils befestigt. Die Elektrode 16 ist ausserdem über Anschlussleitungen 21 mit einem Regler 22 verbunden, welcher über eine Leitung 23 den Nachführmotor 15 und über Leitungen 24 und 25 den X-Antriebsmotor 26 und den Y-Antriebsmotor 27 speist. Der X-Antriebsmotor 26 und der Y-Antriebsmotor 27 sind Teil eines in Figur 3 schematisch angedeuteten X-Y-Tisches 28 mit Zahnstangen 29, 30 zur Übertragung des Antriebs vom X-Antriebsmotor 26 bzw. vom Y-Antriebsmotor 27 sowie Halterungen 31 zum Einspannen der Stahlbleche 2a und 2b.

Im Betriebsablauf speist der Regler 22 die beiden Antriebsmotore 26 und 27, um die Stahlbleche 2a, 2b derart unter dem Laser-Schweisskopf 1 durchzuführen, dass der Laserstrahl 3 kontinuierlich eine Schweissnaht (V-Naht 4) erzeugt.

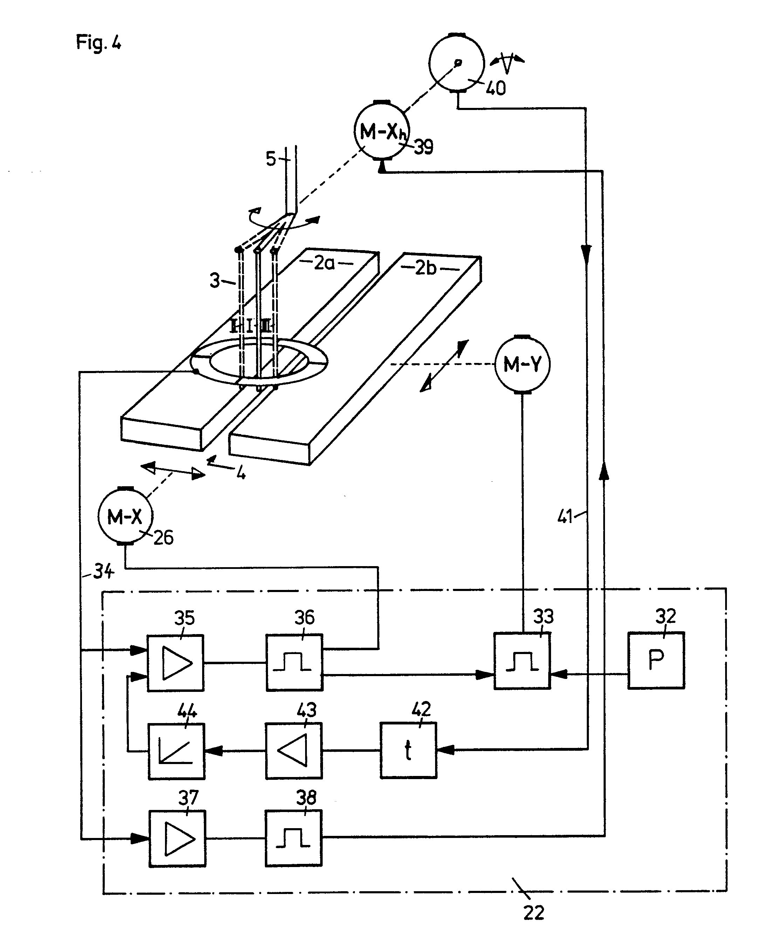

Dabei wird durch eine Programm-Steueranordnung 32 (Figur 4) ein Steuersignal an eine Y-Regel- und Antriebseinrichtung 33 gelegt, welche den Y-Antriebsmotor 27 mit konstanter Vorschubgeschwindigkeit ansteuert. Solange die V-Naht 4 parallel zur Y-Achse in der Mitte unter dem Laserstrahl 3 verläuft, wird durch die Elektrode 16 kein Abweichsignal an die Leitung 34 abgegeben. Damit gibt auch der Verstärker 35 kein Signal an die Regel- und Antriebseinrichtung 36 für den X-Antriebsmotor 26 ab, so dass der X-Y-Tisch 28 und damit die Stahlbleche 2a, 2b ausschliesslich in der X-Richtung bewegt werden. Auch am Verstärker 37 liegt kein Abweichsignal an, so dass der Hilfsregler 38 kein Ausgangssignal an den Nachführmotor 39 abgibt, und dieser das untere Gehäuseteil 13 in der neutralen Position I (Figur 3 und 4) hält.

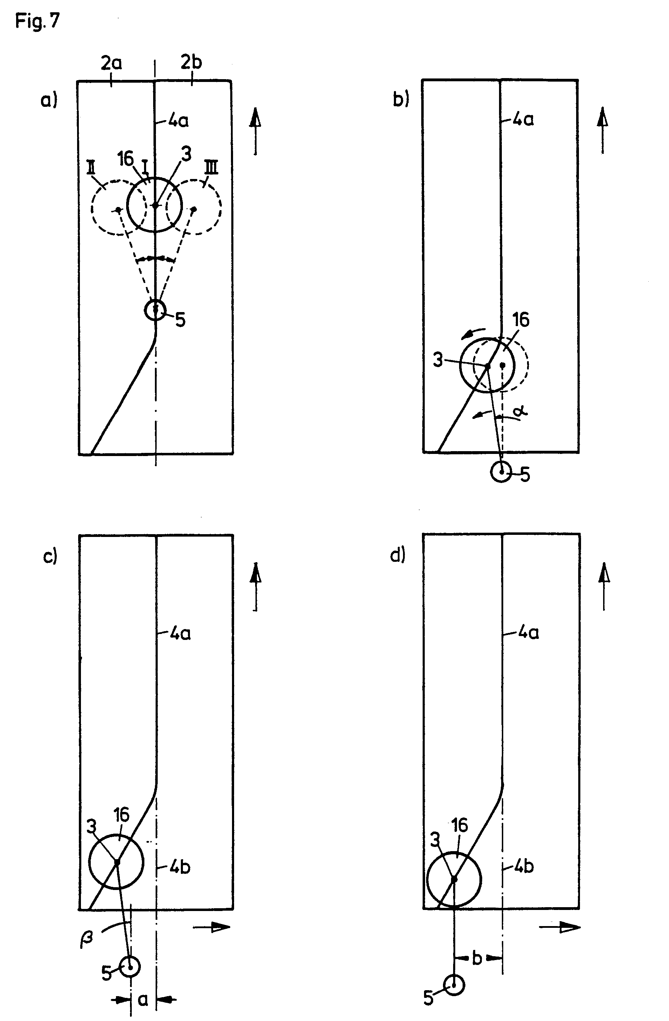

Im Zusammenhang mit der Darstellung einer gekrümmt verlaufenden V-Naht 4a in Figur 7 soll jetzt die Funktion der Nachführung des Laserstrahls 3 erläutert werden. In der Darstellung a) befindet sich der Laserstrahl 3 über einem Abschnitt der V-Naht 4a, der parallel zur Y-Achse verläuft. Die V-Naht 4a befindet sich mittig unter der Elektrode 16, so dass diese keine Abweichsignale über die Leitung 34 an den Verstärker 35 und den Verstärker 37 abgibt.

Darstellung b zeigt wie mit fortschreitendem Antrieb in der Y-Achse der Laserstrahl 3 den gekrümmten Abschnitt der V-Naht 4a erreicht hat. Diese Abweichung hat zu einem Signal an der Leitung 34 und am Eingang der Verstärker 35 und 37 geführt. Der Verstärker 37 liefert Ausgangssignale an den Hilfsregler 38, der sofort den Nachführmotor 39 ansteuert und in Richtung der Position II verschwenkt. Aufgrund der Trägheit des X-Y-Tisches 28 und des Y-Antriebsmotors 27 hat in dieser Position noch keine Auslenkung des Y-Antriebsmotors 27 stattgefunden. Dies ist dadurch angedeutet, dass der Hauptstrahlengang 5 in der Darstellung b) immer noch mit dem geradlinigen Abschnitt der V-Naht 4a fluchtet, der obere Gehäuseteil 9 sich also noch in der gleichen Relativlage zu den Stahlblechen 2a und 2b befindet wie in Darstellung a). Der Laserstrahl 3 fluchtet jedoch immer noch mit der V-Naht 4a, weil das untere Gehäuseteil 13 durch Betätigung des Nachführmotors 39 um den Winkel α gegenüber dem oberen Gehäuseteil 9 verschwenkt wurde. Jetzt setzt jedoch die Regelung über Verstärker 35 und Regel- und Antriebseinrichtung 36 ein, so dass der X-Antriebsmotor 26 den X-Y-Tisch 28 in X-Richtung verfährt, um der Bahnabweichung zu folgen. Das Abweichungs-Signal am Eingang des Verstärkers 35 wird dabei verstärkt durch eine Gegenkopplungs-Anordnung, deren Signale durch einen Signalgeber 40 gewonnen werden. Der Signalgeber 40 ist auf der Achse des Nachführmotors 39 befestigt und gibt über eine Leitung 41 Signale an ein Zeitglied 42 ab, sofern und solange der Nachführmotor 39 aus der neutralen Position I verlagert ist. Das Zeitglied 42 gibt die Gegenkopplungs-Signale an einen Verstärker 43 mit einer Zeitverzögerung ab, die verhindert, dass schnelle Signalschwankungen unmittelbar weitergeleitet werden und ggf. ein Schwingen des Systems bewirken. Der Verstärker 43 gibt die Ausgangssignale an ein Integrierglied 44, welches ausgangsseitig mit einem zweiten Eingang des Verstärkers 35 verbunden ist. Die Schaltungsanordnung ist dabei so ausgelegt, dass die vom Signalgeber 40 abgeleiteten Gegenkopplungs-Signale am Verstärker 35 ein Abweichungssignal erzeugen, auch wenn durch Betätigung des Nachführmotors 39 der Laserstrahl 3 der V-Naht 4a nachgeführt wurde.

Dementsprechend erfolgt eine zusätzliche Beschleunigung des X-Antriebsmotors 26, was bewirkt, dass der Laserstrahl 3 aus der V-Naht 4a herausgeregelt würde, wenn nicht gleichzeitig durch die dabei auftretenden Abweichungssignale über den Nachführ-Verstärker 37, den Hilfs-Regler 38 und den Nachführmotor 39 das untere Gehäuseteil 13 wieder in Richtung auf die neutrale Position I zurückgeregelt würde. Aus Figur 7c) ist ersichtlich, dass sich der Winkel α gemäss Figur 7b) bereits zum Winkel β verkleinert hat, obwohl der Laserstrahl 3 bereits einen grösseren Abstand zur Mittellinie 4b aufweist und sich der Hauptstrahlengang 5 bereits im Abstand a von der Mittellinie 4b befindet.

Sobald die Nachregelung durch den X-Antriebsmotor 26 voll eingesetzt hat, wird der Nachführmotor 39 kontinuierlich in seine neutrale Position I zurückbewegt und der Bahnvorschub in der V-Naht 4a erfolgt ausschliesslich durch proportionalen Antrieb sowohl des X-Antriebsmotors als auch des Y-Antriebsmotors. Dies ist gemäss Figur 7d) nach Erreichen des Abstands b des Hauptstrahlengangs 5 von der Mittellinie 4b der Fall. Sofern deshalb in dieser Lage durch die Elektrode 16 eine weitere (nicht dargestellte) Bahnänderung ermittelt würde, steht für die schnelle Nachführung wieder der gesamte Auslenk-Bereich zwischen Position II und III zur Verfügung.

Wie in Figur 4 im Blockdiagramm dargestellt ist, besteht über eine Leitung 45 eine Verbindung zwischen der Regel- und Antriebseinrichtung 36 für die X-Ablenkung und der Regel- und Antriebseinrichtung 33 für die Y-Auslenkung. Dies ist deshalb wünschenswert, weil die von der Programm-Steueranordnung 32 vorgegebene Nachführgeschwindigkeit für die resultierende Relativbewegung von Laserstrahl 3 zum X-Y-Tisch 28 gilt, so dass die Antriebsgeschwindigkeit des Y-Antriebsmotors 27 an die Antriebsgeschwindigkeit des X-Antriebsmotors 26 angepasst werden muss.

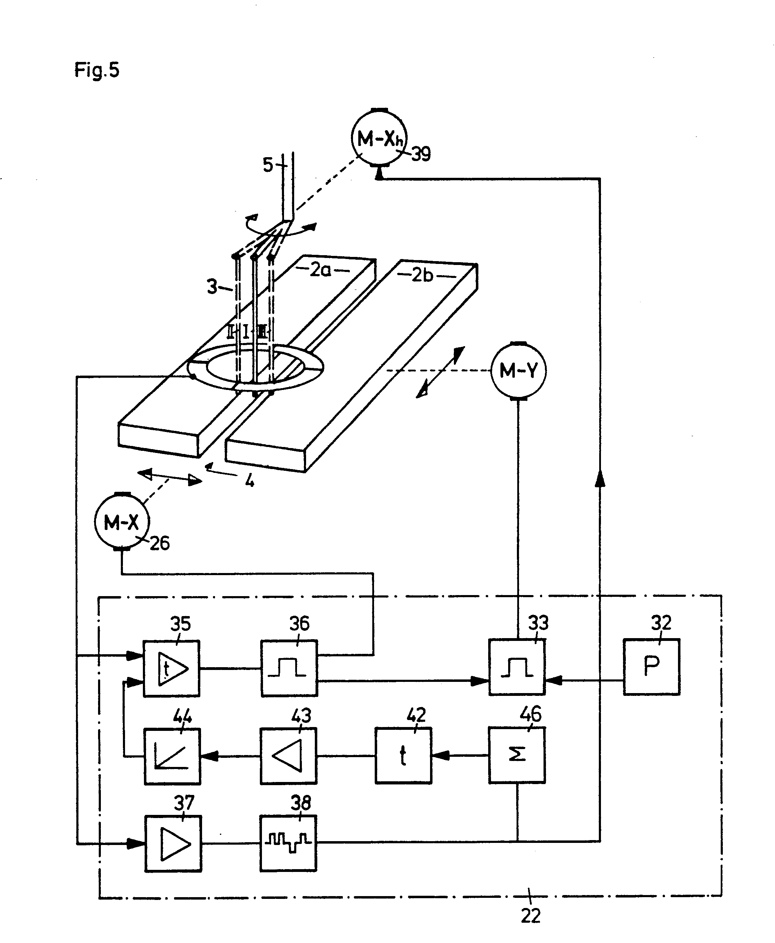

Figur 5 zeigt ein gegenüber Figur 4 leicht geändertes Ausführungsbeispiel, bei welchem kein Signalgeber 40 vorgesehen ist. Stattdessen ist der Ausgang des Hilfsreglers 38 an Summierglied 46 geschaltet, welches alle positiven und negativen Antriebssignale für einen bestimmten Zeitraum speichert und gleichzeitig summiert. Wird deshalb der Nachführmotor 39 nur zur kurzfristigen Auslenkung in positiver und unmittelbar darauf in negativer Richtung mit Steuersignalen vom Hilfsregler 38 beaufschlagt, kompensieren sich die Signale im Summierglied 46 und am Ausgang zum Zeitglied 42 liegt kein Signal an. Erst wenn über einen längeren Zeitraum am Summierglied 46 Signale aufsummiert werden, wird in der im Zusammenhang mit Figur 4 beschriebenen Weise ein Gegenkopplungssignal über den Verstärker 43 an das Integrierglied 44 und den zweiten Eingang des Verstärkers 35 gelegt, so dass durch die Regel- und Antriebseinrichtung 36 eine entsprechende Aussteuerung des X-Antriebsmotors 26 erfolgt.

Selbstverständlich ist die Ausgestaltung der im Blockdiagramm systematisch dargestellten Funktionsweise durch den Fachmann frei wählbar und an die besonderen Gegebenheiten der Anwendung anpassbar. Dies gilt insbesondere auch für die Zeitkonstanten der Verstärker und Zeitglieder, die insbesondere an die Nachführgeschwindigkeiten und die zu bewegenden Massen anzupassen sind. Selbstverständlich sind auch andere Lösungen der beschriebenen «Gegenkopplung» möglich, ohne dass dadurch der allgemeine Erfindungsgedanke verlassen würde. Auch ist es möglich, die Hilfs-Nachführeinrichtung statt über die Elektrode 16 direkt durch die Programm-Steueranordnung 32 (Figur 4) anzusteuern, wenn eine schnelle Bahnänderung durch die Programm-Steueranordnung 32 vorgegeben werden soll.

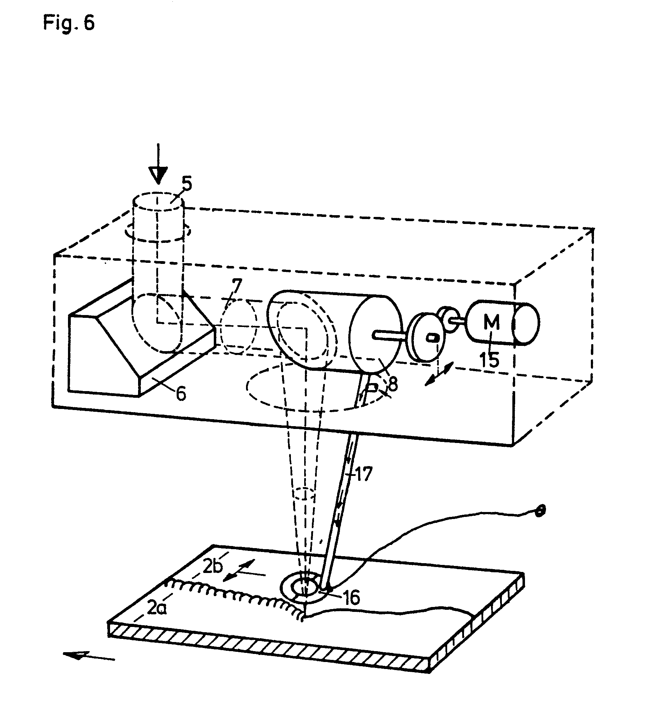

Figur 6 zeigt die schematische Darstellung eines abgewandelten Ausführungsbeispiels, bei welchem zur Hilfs-Nachführung nicht das ganze Gehäuseunterteil 13 (Figur 1 bis 3), sondern lediglich der Paraboloid-Spiegel 8 durch den Hilfs-Nachführmotor 15 ausgelenkt wird. Im übrigen ist die Funktionsweise der Anordnung analog dem im Zusammenhang mit Figur 1 bis 5 beschriebenen Beispiel. Auch die Elektrode 16 entspricht dem 4-Quadranten-Sensor gemäss den eingangs genannten Patentanmeldungen. Selbstverständlich lassen sich aber hier auch andere Fühler oder Nachführsensoren einsetzen, sofern einwandfreie Messung der Bahnabweichung in der gewünschten Achse bzw. in den gewünschten Achsen möglich ist.

**Patentansprüche**

1. Anordnung zum Bearbeiten eines Werkstücks mittels eines Laserstrahls mit

(A) einem Bearbeitungswerkzeug, welches ein System zur Erzeugung und Fokussierung eines Laserstrahls beinhaltet,

(B) einer Aufnahme-Einrichtung zum Halten und Führen des oder der zu bearbeitenden Werkstücke,

(C) wenigstens einer Antriebseinrichtung zum Verlagern von Bearbeitungswerkzeug und Werkstück relativ zueinander entlang einer Bearbeitungsbahn, sowie

(D) einer Steuer- und Regeleinrichtung zum Ansteuern der Antriebseinrichtung und zum Führen des Laserstrahls entlang der vorbestimmbaren Bearbeitungsbahn am Werkstück bzw. an den Werkstücken, wobei die Steuer- und Regeleinrichtung wenigstens einen Nachführsensor im Arbeitsbereich des Laserstrahls aufweist, durch welchen Regelsignale zum Ermitteln von Bahnabweichungen und/oder zum Führen des Laserstrahls entlang der Bearbeitungsbahn in die Steuer- und Regeleinrichtung aufschaltbar sind, dadurch gekennzeichnet, dass das Bearbeitungswerkzeug eine Hilfs-Nachführeinrichtung zum schnellen Auslenken des Laserstrahls bei kleinen Abweichungen der Ist-Bearbeitungsbahn von der Soll-Bearbeitungsbahn aufweist, wobei die Nachführ-Beschleunigung und/oder Nachführ-Geschwindigkeit der Hilfs-Nachführeinrichtung grösser ist als die Nachführ-Beschleunigung und/oder Nachführ-Geschwindigkeit der Antriebseinrichtung.

2. Anordnung nach Anspruch 1, dadurch gekennzeichnet, dass im Strahlengang des Lasers eine Ablenkeinrichtung vorgesehen ist, welche durch die Hilfs-Nachführeinrichtung zum Auslenken des Laserstrahls antreibbar ist.

3. Anordnung nach Anspruch 2, dadurch gekennzeichnet, dass die Ablenkeinrichtung wenigstens einen verschwenkbaren Spiegel aufweist.

4. Anordnung nach Anspruch 2 oder 3, dadurch gekennzeichnet, dass zur Fokussierung des Laserstrahls ein Paraboloid-Spiegel vorgesehen ist.

5. Anordnung nach Anspruch 3 oder 4, dadurch gekennzeichnet, dass der Paraboloid-Spiegel verschwenkbar ist.

6. Anordnung nach einem der Ansprüche 1 bis 5, dadurch gekennzeichnet, dass ein die Laserstrahlen etwa normal auf die Werkstückoberfläche richtender Umlenkspiegel vorgesehen ist, der in wenigstens einer etwa 90° zum reflektierten, d.h. austretenden Laserstrahl verlaufenden Achse verschwenkbar gelagert ist.

7. Anordnung nach einem der Ansprüche 1 bis 5, dadurch gekennzeichnet, dass die Laserstrahlen in einem etwa in Richtung der Bearbeitungsbahn im Abstand vom Werkstück verlaufenden Quer-Strahlengang gelenkt und auf einen Umlenkspiegel gerichtet sind, wobei der Umlenkspiegel die Laserstrahlen gegen das Werkzeug richtet, und dass zur schnellen Auslenkung durch die Hilfs-Nachführeinrichtung letztere das optische System des Quer-Strahlengangs einschliesslich des Umlenkspiegels etwa parallel zur Werkstückebene um eine Drehachse verschwenkt, die etwa senkrecht zum Werkstück und parallel zum austretenden Laserstrahl verläuft.

8. Anordnung nach Anspruch 7, dadurch gekennzeichnet, dass wenigstens zwei Umlenkspiegel vorgesehen sind, von denen der erste die gegen das Werkstück gerichteten Laserstrahlen aus einem Hauptstrahlengang in den Querstrahlengang umleitet und wobei die genannte Drehachse mit der Achse des Hauptstrahlengangs fluchtet.

9. Anordnung nach einem der vorangehenden Ansprüche, dadurch gekennzeichnet, dass der Nachführ-Sensor ringförmig ausgebildet ist, und dass der Laserstrahl durch den Sensor-Ring gelenkt ist.

10. Anordnung nach einem der vorangehenden Ansprüche, dadurch gekennzeichnet, dass eine ringförmige Düse zur Zuführung von Schutzgas in den Arbeitsbereich des Laserstrahls vorgesehen und der Laserstrahl durch die Ring-Düse gelenkt ist.

11. Anordnung nach einem der vorangehenden Ansprüche, gekennzeichnet durch einen Haupt-Regler zur Erzeugung von Regelsignalen für den Haupt-Antrieb in einer Nachführachse, einen Hilfs-Regler zur Erzeugung von Regelsignalen für die Hilfs-Nachführeinrichtung, eine Gegenkopplungsschaltung, welche an den Haupt-Regler zur Erzeugung von Antriebssignalen angeschaltet ist, sofern und solange die Hilfs-Nachführeinrichtung aus ihrer neutralen Position ausgelenkt ist, wobei wenigstens in der Gegenkopplungsschaltung ein Zeit- und Integrierglied zur zeitlichen Verzögerung und zum Integrieren der Gegenkopplungssignale vor deren Aufschaltung auf den Haupt-Regler vorgesehen ist.

12. Anordnung nach Anspruch 11, dadurch gekennzeichnet, dass die Gegenkopplungsschaltung einen mechanisch mit der Hilfs-Nachführeinrichtung verbundenen Positionsmelder aufweist, welcher beim Abweichen der Hilfs-Nachführeinrichtung von der neutralen Position Signale zur Rückkopplung an den Haupt-Regler abgibt.

13. Anordnung nach Anspruch 11, dadurch gekennzeichnet, dass die Gegenkopplungsschaltung ein Summierglied aufweist, welches die vom Hilfs-Regler an die Hilfs-Nachführeinrichtung abgegebenen Regelsignale summiert und Gegenkopplungssignale an den Haupt-Regler abgibt, sofern die Summe der positiven und negativen Nachführsignale von Null abweicht, d.h. sofern die Hilfs-Nachführeinrichtung sich nicht in der neutralen Position befindet.

14. Verfahren zum Bearbeiten eines Werkstücks mit einem Laserstrahl mittels einer Anordnung nach Anspruch 1, dadurch gekennzeichnet, dass Regelsignale sowohl an die Antriebseinrichtung als auch an die Hilfs-Nachführeinrichtung gelegt werden, dass Abweichungen der Ist-Bearbeitungsbahn von der Soll-Bearbeitungsbahn des Laserstrahls zunächst durch Verlagerung der schnellen Hilfs-Nachführeinrichtung aus einer neutralen Position in eine Auslenkposition kompensiert werden, soweit sie durch deren Auslenkbereich kompensierbar sind, und dass die Antriebseinrichtung zur Kompensation der Bahnabweichungen solange angesteuert wird, bis die Hilfs-Nachführeinrichtung wieder aus der Auslenkposition in die neutrale Position zurückverlagert werden kann.

15. Verfahren nach Anspruch 14, dadurch gekennzeichnet, dass die Hilfs-Nachführeinrichtung mit einem Geber für elektrische Grössen zur Kennzeichnung der Abweichung von der neutralen Position der Hilfs-Nachführeinrichtung versehen ist, dessen Ausgangssignale vorzugsweise mit einer grossen Zeitkonstante an den Haupt-Regler bzw. den Hauptantrieb für das Werkzeug bzw. das Werkstück rückgekoppelt werden, und dass diese Ausgangssignale vor der Aufschaltung auf den Haupt-Regler integriert werden, so dass der Hauptantrieb nur dann nachgeregelt wird, wenn die Hilfs-Nachführeinrichtung eine bleibende Auslenkung aus der neutralen Position aufweist.

## Claims

1. An arrangement for processing a workpiece by means of a laser beam comprising:

(A) a processing tool which includes a system for producing and focussing a laser beam,

(B) a receiving means for holding and guiding the workpiece or workpieces to be processed,

(C) at least one drive means for displacement of the processing tool and the workpiece relative to each other along a processing path, and

(D) a control and regulating means for actuating the drive means and for guiding the laser beam along the predeterminable processing path on the workpiece or workpieces, wherein the control and regulating means has at least one tracking sensor in the working region of the laser beam, by which regulating signals for detecting deviations from the path and/or for guiding the laser beam along the processing path can be applied to the control and regulating means, characterised in that the processing tool has an auxiliary tracking means for rapid deflection of the laser beam in the event of minor deviations of the actual processing path from the reference processing path, wherein the tracking acceleration and/or tracking speed of the auxiliary tracking means is greater than the tracking acceleration and/or tracking speed of the drive means.

2. An arrangement according to claim 1 characterised in that provided in the path of the beam of the laser is a deflection means which can be driven by the auxiliary tracking means for deflecting the laser beam.

3. An arrangement according to claim 2 characterised in that the deflection means has at least one pivotable mirror.

4. An arrangement according to claim 2 or claim 3 characterised in that a paraboloid mirror is provided for focussing of the laser beam.

5. An arrangement according to claim 3 or claim 4 characterised in that the paraboloid mirror is pivotable.

6. An arrangement according to one of claims 1 to 5 characterised in that there is provided a direction-changing mirror which directs the laser beams approximately normal on to the workpiece surface and which is mounted pivotably in at least one axis which extends at about 90° relative to the reflected, that is to say emergent laser beam.

7. An arrangement according to one of claims 1 to 5 characterised in that the laser beams are deflected in a transverse beam path extending approximately in the direction of the processing path at a spacing from the workpiece and are directed on to a direction-changing mirror, wherein the direction-changing mirror directs the laser beams towards the workpiece, and that for rapid deflection by the auxiliary tracking means the latter pivots the optical system of the transverse beam path including the direction-changing mirror approximately parallel to the plane of the workpiece about an axis of rotation which extends approximately perpendicularly to the workpiece and parallel to the emergent laser beam.

8. An arrangement according to claim 7 characterised in that there are provided at least two direction-changing mirrors, the first of which diverts the laser beams which are directed towards the workpiece out of a main beam path into the transverse beam path, and wherein said axis of rotation is aligned with the axis of the main beam path.

9. An arrangement according to one of the preceding claims characterised in that the tracking sensor is of a ring-like configuration and that the laser beam is directed through the sensor ring.

10. An arrangement according to one of the preceding claims characterised in that there is provided a ring-like nozzle for feeding protective gas into the working region of the laser beam and the laser beam is directed through the ring nozzle.

11. An arrangement according to one of the preceding claims characterised by a main regulator for producing regulating signals for the main drive in a tracking axis, an auxiliary regulator for producing regulating signals for the auxiliary tracking means, a negative feedback circuit which is connected to the main regulator for producing drive signals if and as long as the auxiliary tracking means is deflected out of its neutral position, wherein provided at least in the negative feedback circuit is a timing and integrating member for time delay and integration of the negative feedback signals before they are applied to the main regulator.

12. An arrangement according to claim 11 characterised in that the negative feedback circuit has a position signalling means which is mechanically connected to the auxiliary tracking means and which outputs signals for feedback to the main regulator in the event of the auxiliary tracking means deviating from the neutral position.

13. An arrangement according to claim 11 characterised in that the negative feedback circuit has a summing member which sums the regulating signals outputted by the auxiliary regulator to the auxiliary tracking means and outputs negative feedback signals to the main regulator if the sum of the positive and negative tracking signals deviates from zero, that is to say if the auxiliary tracking means is not in the neutral position.

14. A method of processing a workpiece with a laser beam by means of an arrangement according to claim 1 characterised in that regulating signals are applied both to the drive means and also to the auxiliary tracking means, that deviations of the actual processing path from the reference processing path of the laser beam are initially compensated by displacement of the rapid auxiliary tracking means from a neutral position into a deflection position insofar as they can be compensated by the deflection range thereof, and that the drive means, for compensation of the deviations from the path, is actuated until the auxiliary tracking means can be moved back again from the deflection position into the neutral position.

15. A method according to claim 14 characterised in that the auxiliary tracking means is provided with a sender for electrical parameters for characterising the deviation from the neutral position of the auxiliary tracking means, the output signals of said sender preferably being fed back with a large time constant to the main regulator or the main drive for the tool or the workpiece, and that said output signals are integrated before being applied to the main regulator so that the main drive is adjusted only when the auxiliary tracking means presents a persistent deflection out of the neutral position.

## Revendications

1. Dispositif pour l'usinage d'une pièce à l'aide d'un faisceau laser, comportant:

(A) un outil d'usinage qui contient un système pour produire et focaliser un faisceau laser,

(B) un mécanisme de maintien pour maintenir et guider la ou les pièces à usiner,

(C) au moins un mécanisme d'entraînement pour déplacer l'outil d'usinage et la pièce relativement l'un à l'autre le long d'un chemin d'usinage, ainsi que

(D) un mécanisme de pilotage et de régulation pour piloter le mécanisme d'entraînement et pour guider le faisceau laser le long du chemin d'usinage prédéterminable sur la pièce ou sur les pièces, étant précisé que le mécanisme de pilotage et de régulation présente, dans la zone de travail du faisceau laser, au moins un détecteur de poursuite, par lequel des signaux de régulation peuvent être envoyés dans le mécanisme de pilotage et de régulation pour déterminer des écarts par rapport au chemin et/ou pour guider le faisceau laser le long du chemin d'usinage, caractérisé en ce que l'outil d'usinage présente un mécanisme auxiliaire de poursuite pour faire dévier rapidement le faisceau laser en présence de petits écarts du chemin d'usinage réel par rapport au chemin d'usinage prescrit, étant précisé que laccélération de poursuite et/ou la vitesse de poursuite du mécanisme auxiliaire de poursuite sont supérieures à l'accélération de poursuite et/ou à la vitesse de poursuite du mécanisme d'entraînement.

2. Dispositif selon la revendication 1, caractérisé en ce qu'il est prévu sur le chemin du faisceau du laser un mécanisme de renvoi qui peut être entraîné par le mécanisme auxiliaire de poursuite pour faire dévier le faisceau laser.

3. Dispositif selon la revendication 2, caractérisé en ce que le mécanisme de renvoi du faisceau présente au moins un miroir pivotant.

4. Dispositif selon la revendication 2 ou 3, caractérisé en ce que pour focaliser le faisceau laser, il est prévu un miroir en paraboloïde.

5. Dispositif selon la revendication 3 ou 4, caractérisé en ce que le miroir en paraboloïde est pivotant.

6. Dispositif selon l'une des revendications 1 à 5, caractérisé en ce qu'il est prévu un miroir de changement de direction qui dirige les faisceaux laser à peu près perpendiculairement à la surface de la pièce et qui est monté de façon à pouvoir pivoter sur au moins un axe dirigé à environ 90° par rapport au faisceau laser réfléchi, c'est-à-dire sortant.

7. Dispositif selon l'une des revendications 1 à 5, caractérisé en ce que les faisceaux laser sont guidés sur un chemin transversal dont la direction est à peu près la direction du chemin d'usinage, et à une certaine distance de la pièce, puis sont dirigés sur un miroir de changement de direction, ce miroir de changement de direction dirigeant alors les faisceaux laser vers la pièce; et en ce que, pour obtenir une déviation rapide au moyen du mécanisme auxiliaire de poursuite, ce dernier fait pivoter le système optique du chemin transversal, y compris le miroir de changement de direction, à peu près parallèlement au plan de la pièce, autour d'un axe de rotation dirigé à peu près perpendiculairement à la pièce et parallèlement au faisceau laser sortant.

8. Dispositif selon la revendication 7, caractérisé en ce qu'il est prévu au moins deux miroirs de changement de direction dont le premier fait passer les faisceaux laser dirigés vers la pièce, d'un chemin principal du faisceau sur le chemin transversal du faisceau, l'axe de rotation mentionné étant aligné avec l'axe du chemin principal du faisceau.

9. Dispositif selon l'une des revendications précédentes, caractérisé en ce que le détecteur de poursuite a une forme annulaire; et en ce que le faisceau laser est guidé par l'intermédiaire de l'anneau détecteur.

10. Dispositif selon l'une des revendications précédentes, caractérisé en ce qu'il est prévu une buse annulaire pour amener du gaz de protection dans la zone de travail du faisceau laser et le faisceau laser est guidé par l'intermédiaire de la buse annulaire.

11. Dispositif selon l'une des revendications précédentes, caractérisé par un régulateur principal pour produire des signaux de régulation pour l'entraînement principal sur un axe de poursuite, un régulateur auxiliaire pour produire des signaux de régulation pour le mécanisme auxiliaire de poursuite, un circuit de contre-couplage qui est en circuit sur le régulateur principal pour produire des signaux d'entraînement dans la mesure et aussi longtemps que le mécanisme auxiliaire de poursuite est dévié de sa position neutre, étant précisé qu'au moins dans le circuit de contre-couplage est prévu un élément de temporisation et d'intégration pour retarder dans le temps et pour intégrer les signaux de contre-couplage avant leur envoi dans le régulateur principal.

12. Dispositif selon la revendication 11, caractérisé en ce que le circuit de contre-couplage présente un indicateur de position qui est lié mécaniquement au mécanisme auxiliaire de poursuite et qui, lorsque le mécanisme auxiliaire de poursuite s'écarte de la position neutre, envoie au régulateur principal des signaux de rétro-couplage.

13. Dispositif selon la revendication 11, caractérisé en ce que le circuit de contre-couplage présente un élément additionneur qui additionne les signaux de régulation envoyés par le régulateur auxiliaire au mécanisme auxiliaire de poursuite et qui envoie des signaux de contre-couplage au régulateur principal dans la mesure où la somme des signaux positifs et négatifs de poursuite s'écarte de zéro, c'est-à-dire dans la mesure où le mécanisme auxiliaire de poursuite ne se trouve pas dans la position neutre.

14. Procédé pour l'usinage d'une pièce à l'aide d'un faisceau laser au moyen d'un dispositif selon la revendication 1, caractérisé en ce que des signaux de régulation sont envoyés aussi bien au mécanisme d'entraînement auxiliaire de poursuite; en ce que des écarts du chemin d'usinage réel par rapport au chemin d'usinage prescrit du faisceau laser sont tout d'abord compensés par déplacement du mécanisme auxiliaire de poursuite rapide pour passer d'une position neutre à une position déviée, dans la mesure où ils peuvent être compensés par la plage de déviation de ce mécanisme; et en ce que le mécanisme d'entraînement est piloté, pour la compensation des écarts de chemin, jusqu'à ce que le mécanisme auxiliaire de poursuite puisse repasser de la position déviée à la position neutre.

15. Procédé selon la revendication 14, caractérisé en ce que le mécanisme auxiliaire de poursuite comporte, pour signaler l'écart par rapport à la position neutre du mécanisme auxiliaire de poursuite, un émetteur de grandeur électrique dont les signaux de sortie sont de préférence rétro-couplés, avec une constante de temps élevée au régulateur principal ou au mécanisme principal d'entraînement de l'outil ou de la pièce; et en ce que ces signaux de sortie sont intégrés avant leur envoi au régulateur principal, pour que le mécanisme principal d'entraînement ne fasse l'objet d'une reprise de régulation que si le mécanisme auxiliaire de poursuite présente une déviation permanente par rapport à la position neutre.

Fig. 2

Fig. 1

Fig. 3

## Fig. 4

Fig.5

Fig. 6

Fig. 7